# FASCICULE DE BREVET EUROPEEN

(11) **EP 3 993 596 B1**
(45) Date de publication et mention de la délivrance du brevet: **14.10.2026**
(21) Numéro de dépôt: 20735190.9
(22) Date de dépôt: 02.07.2020
(51) Int. Cl.: A01B 59/041, A01B 59/06, A01B 59/00

(54) **DISPOSITIF D'ATTELAGE POUR ENGIN AGRICOLE**
ANHÄNGEVORRICHTUNG FÜR LANDWIRTSCHAFTLICHES FAHRZEUG
HITCH DEVICE FOR AGRICULTURAL VEHICLE

(30) Priorité: 05.07.2019 FR 1907530
(43) Date de publication de la demande: 11.05.2022
(73) Titulaire: Defrancq, Hubert, 02190 Guignicourt (FR)
(72) Inventeur: Defrancq, Hubert, 02190 Guignicourt (FR)
(74) Mandataire: IPAZ
(86) Numéro de dépôt international: PCT/EP2020/068677
(87) Numéro de publication internationale: WO 2021/004888

(56) Documents cités:
- EP-A1- 0 990 381
- WO-A1-2018/172458
- FR-A1- 2 740 649
- US-A- 5 031 704

## Description

La présente invention se rapporte au domaine des engins techniques et concerne en particulier un dispositif d'attelage et de relevage d'outil agricole, propre à être monté sur un engin agricole, et plus particulièrement à l'arrière dudit l'engin.

La présente invention se rapporte plus particulièrement au réglage latéral de la position des outils agricoles tractés par un engin apte à faire varier latéralement la position de l'outil en réponse à un signal de manière à maintenir de façon fiable un trajet présélectionné ou à suivre les rangs de la culture en place pour ne pas l'endommager lors des opérations de soins de la culture. Le signal peut être une géolocalisation (GPS), une image vidéo, un capteur ultra-sons ou un capteur mécanique.

L'agriculture s'est développée dans le sens de la précision grâce à l'avènement des systèmes de navigation par satellite tel que les GPS, ou bien des moyens de détection non destructifs des cultures en place. En utilisant un équipement GPS, un agriculteur peut ainsi localiser une position précise dans un champ, ce qui permet de cartographier avec précision les étendues exploitées, selon un grand nombre de paramètres tels que le rendement des cultures, la topographie, la teneur en matière organique, le niveau d'humidité, le taux d'azote, le pH et autres. Les fabricants d'équipements de précision ont commencé à fournir des systèmes de direction automatisés qui utilisent les signaux GPS pour diriger un engin agricole et notamment un tracteur, sur un trajet prédéterminé. Bien que de tels équipements fonctionnent bien pour guider de manière fiable et précise l'engin agricole, les variations de sols et de topographie limitent le positionnement fiable et précis des outils tractés.

Plusieurs solutions pour contrôler la géolocalisation d'un outil agricole attelé à un tracteur ont été envisagées.

De telles solutions sont reliées à la barre de traction du tracteur ou aux deux points inférieurs de l'attelage arrière. Ces solutions consistent en une liaison fixe au tracteur moyennant une barre de traction ou bien deux ou trois points de fixation, et une interface pour déplacer l'outil transversalement, en fonction du signal de géolocalisation ou de détection de la culture en place, pour que l'outil suive la même direction que le tracteur ou évite d'endommager la culture en place.

Selon une première approche, l'interface de déplacement de l'outil fait tourner ce dernier autour d'un axe vertical. Pour travailler, l'attelage arrière du tracteur doit avoir une capacité de balancier libre. L'outil doit être équipé d'un dispositif engagé dans le sol (essentiellement au moins un disque) qui génère une force latérale pour déplacer l'outil dans la direction souhaitée. Ce système de correction est toutefois sensible à la typologie du sol et à la déclivité du terrain.

Selon une seconde approche, l'interface de déplacement de l'outil fait translater latéralement ce dernier. Pour travailler, l'attelage arrière du tracteur doit être verrouillé, sans balancier possible. Toutefois, ce type de solutions n'est pas compatible avec des outils profondément engagés dans le sol.

Une solution a alors été d'équiper l'interface, d'ancrages, contre lesquels une réaction de déplacement est appliquée pour déplacer l'unité de travail vers le côté, tandis que l'attelage arrière du tracteur a une capacité de balancier libre. Ces aménagements ne sont toutefois applicables qu'aux outils à faible traction et à faible ancrage dans le sol.

Une autre solution décrite dans le document WO2016041547A1 propose de modifier l'attelage en faisant varier la longueur des bras au moyen d'un vérin afin de permettre la rotation de l'interface en plus de la translation de l'outil. Toutefois, cette solution impose la modification des attelages standards et induit un contrôle complexe des mouvements concomitants de l'attelage et de l'interface.

Selon une troisième approche, le document US6089328 A1 décrit un attelage arrière munis de vérins assurant une commande du mouvement latéral des bras inférieurs. Cependant cette configuration telle que définie ne permet pas d'assurer la fonction souhaitée. En effet, l'écartement des bras est resserré en partie opposée à l'attelage de l'outil par rapport au côté de l'attelage à l'outil dont la largeur est définie par le standard ISO 730/1.

De ce fait, le mouvement possible est limité par la largeur disponible entre les roues du tracteur (cette largeur étant fonction de la largeur des roues), l'écartement entre les rangs des cultures et la contrainte de largeur totale du véhicule pour les déplacements routiers.

De plus, lors du mouvement latéral déporté, l'outil est orienté dans une direction opposée à son déplacement et décrit un arc de cercle, ce qui altère sa capacité à travailler en ligne droite, et perturbe la trajectoire du tracteur.

Selon une quatrième approche, le document WO2018172458 propose de déplacer latéralement l'outil agricole par rapport à l'engin agricole pour compenser le déport du point de convergence pour que l'outil reste positionné par rapport à sa trajectoire souhaitée, et ce, en dépit des asymétries du sol et du relief. La figure 3 du document WO2018172458 décrit plus particulièrement deux axes 63, 64 rigides sur lesquels peuvent être fixés les bras de relevage 7a, 7b, qui par définition permettent de relever l'outil afin de le maintenir hors sol. Les mouvements latéraux contrôlés de déplacement entre le châssis 6 et le châssis 8 imposent que la liaison entre le châssis 6 et les bras de relevage 7a, 7b n'autorise qu'un pivotement autour de l'axe transversal. Le pivotement autour de l'axe vertical n'est assuré que par le pivotement selon l'angle alpha des accroches 41 et 42 ménagées à l'arrière du second châssis.

Cette solution permet de déplacer latéralement l'engin agricole pour que l'outil suive la trajectoire souhaitée malgré ses décalages par rapport à l'engin. Cette solution présente l'intérêt d'être universel en s'installant sur n'importe quel attelage arrière de tracteur.

Cependant cela se traduit par un poids conséquent et par un accroissement du déport de l'outil par rapport au tracteur.

C'est pourquoi, il s'est avéré nécessaire de développer une solution allégée en termes de poids, qui puisse s'adapter aux standards des engins agricoles sans qu'il soit nécessaire d'apporter de modification, et qui puisse être compatible avec le faible encombrement disponible au niveau de l'attelage arrière et avec les outils à ancrage dans le sol importants.

Ainsi, l'objet de la présente invention vise à assurer le déplacement latéral de l'attelage, ce que l'engin agricole ne peut pas faire, tout en gardant la souplesse d'une liaison permettant l'auto-alignement de l'attelage, et ce, tout en réduisant le poids et le déport du dispositif.

L'objet de l'invention consiste en une commande du mouvement transversal des bras d'attelage moyennant une évolution de la partie mobile du dispositif pour assurer la compatibilité des liaisons et leur fonctionnalité.

Plus précisément l'invention a pour objet un dispositif d'attelage d'un outil, propre à être monté sur un engin agricole, comportant :
- un châssis transversal à la direction de progression de l'attelage,
- un système pour accrocher un outil agricole audit châssis, ledit système étant prévu pour pivoter librement autour de l'axe vertical, par rapport au châssis,
- un dispositif de fixation du châssis à l'engin agricole, le dispositif de fixation comportant au moins deux bras dotés de moyens d'actionnement et destinés à relier le châssis à l'engin agricole, et s'étendant suivant une direction sensiblement parallèle à la direction de progression de l'attelage,
dans lequel chacun des bras comporte en son extrémité proximale au châssis une première liaison pivot avec le châssis, permettant à au moins une portion dudit bras de pivoter par rapport au châssis autour de l'axe vertical, ainsi qu'une seconde liaison pivot avec l'engin agricole, permettant à au moins ladite portion dudit bras de pivoter par rapport à l'engin agricole autour de l'axe vertical, l'ensemble des quatre liaisons pivot définissant ainsi un parallélogramme déformable sous l'action de moyens d'actionnement, lesdits moyens d'actionnement étant configurés pour faire pivoter lesdits bras autour de l'axe vertical (z).

Des caractéristiques optionnelles de l'invention, complémentaires ou de substitution sont énoncées ci-après.

Selon un certain mode de réalisation, la seconde liaison pivot des bras peut être disposée en l'extrémité distale par rapport au châssis desdits bras, ladite extrémité distale formant en outre une fixation desdits bras sur l'engin agricole, lesdits bras présentant en outre chacun un coude dont la convexité est tournée vers l'extérieur. Selon un autre mode de réalisation, la seconde liaison pivot des bras peut être ménagée approximativement au milieu desdits bras.

La portion de bras située entre la seconde liaison pivot et le point de fixation à l'engin agricole peut être doublée par une armature.

Le dispositif d'accroche de l'outil agricole au châssis peut comprendre deux accroches disposées au niveau de la partie inférieure du châssis, symétriquement par rapport au plan médian vertical dudit châssis, lesdites accroches s'étendant selon le sens opposé à la direction de progression de l'attelage.

Les accroches situées au niveau de la partie inférieure du châssis peuvent être également pivotantes autour d'un axe du châssis s'étendant transversalement, lesdites accroches pouvant en outre être retenues aux moyens de chandelles. L'angle de pivotement des deux accroches autour de l'axe vertical peut être compris entre 0 ° et +/- 30 °, et préférentiellement entre 0 ° et +/- 15 °.

Le pivotement des accroches autour de l'axe vertical peut être contrôlé par au moins un vérin, ledit au moins vérin étant apte à travailler selon un premier mode correspondant à la libre rotation des accroches autour de l'axe vertical et un second mode dans lequel la rotation des accroches autour de l'axe vertical peut être verrouillée, le châssis étant prolongé en transversal par un premier stabilisateur, voire un second stabilisateur.

Le dispositif d'accroche peut comprendre en outre une troisième accroche située au niveau de la partie supérieure du châssis, ladite accroche constituant un élément de retenue de l'outil agricole.

Le dispositif de fixation du châssis à l'engin agricole peut comprendre en partie haute un élément de liaison entre la partie supérieure du châssis et l'engin agricole, les bras pouvant en outre avantageusement être commandés en relevage, chacune des fixations des bras sur l'engin agricole définissant alors une liaison pivot autour de l'axe s'étendant transversalement à la direction de progression de l'attelage.

Les bras peuvent être commandés par des moyens de relevage et retenus par des chandelles.

Les bras peuvent être commandés par des moyens de relevage intégrés à des chandelles.

Les moyens d'actionnement du pivotement des bras peuvent être constitués de deux vérins à simple effet affectés chacun à un bras, ou bien peuvent être constitués d'un seul vérin à double effet affecté à l'un des deux bras.

Les moyens de relevage peuvent être des vérins à simple effet ou à double effet.

L'angle de pivotement des bras autour de l'axe vertical peut être compris entre 0 et +/- 45°, et préférentiellement entre 0 et +/- 30°.

Le dispositif d'attelage peut comprendre un capteur c pour identifier la position du châssis par rapport à l'engin agricole.

D'autres avantages et particularités de l'invention apparaîtront à la lecture de la description détaillée de mises en œuvre et de modes de réalisation nullement limitatifs, et des dessins annexés suivants :
[Fig.1] la figure 1 une vue en perspective d'un dispositif d'attelage fixé sur un engin agricole selon un certain mode de réalisation de l'invention.
[Fig.2] la figure 2 est une vue de dessus dudit dispositif
[Fig.3] la figure 3 est une vue en perspective dudit dispositif seul.
[Fig.4] la figure 4 une vue en perspective d'un dispositif d'attelage fixé sur un engin agricole selon un autre mode de réalisation de l'invention.
[Fig.5] la figure 5 est une vue de dessus dudit dispositif.
[Fig.6] la figure 6 est une vue en perspective dudit dispositif seul.
[Fig.7] la figure 7 est un schéma de principe du mode de réalisation de l'invention représenté en figures 1, 2 et 3.
[Fig.8] la figure 8 est un schéma de principe du mode de réalisation de l'invention représenté en figures 4, 5 et 6.

A des fins de clarté et de concision, les références sur les figures correspondent aux mêmes éléments.

Les modes de réalisation décrits ci-après étant nullement limitatifs, on pourra notamment considérer des variantes de l'invention ne comprenant qu'une sélection de caractéristiques décrites, isolées des autres caractéristiques décrites (même si cette sélection est isolée au sein d'une phrase comprenant ces autres caractéristiques), si cette sélection de caractéristiques est suffisante pour conférer un avantage technique ou pour différencier l'invention par rapport à l'état de la technique antérieure.

Cette sélection comprend au moins une caractéristique, de préférence fonctionnelle sans détails structurels, ou avec seulement une partie des détails structurels si cette partie uniquement est suffisante pour conférer un avantage technique ou pour différencier l'invention par rapport à l'état de la technique antérieure.

De plus, les différentes caractéristiques, formes, variantes et modes de réalisation de l'invention peuvent être associés les uns avec les autres selon diverses combinaisons dans la mesure où ils ne sont pas incompatibles ou exclusifs les uns des autres.

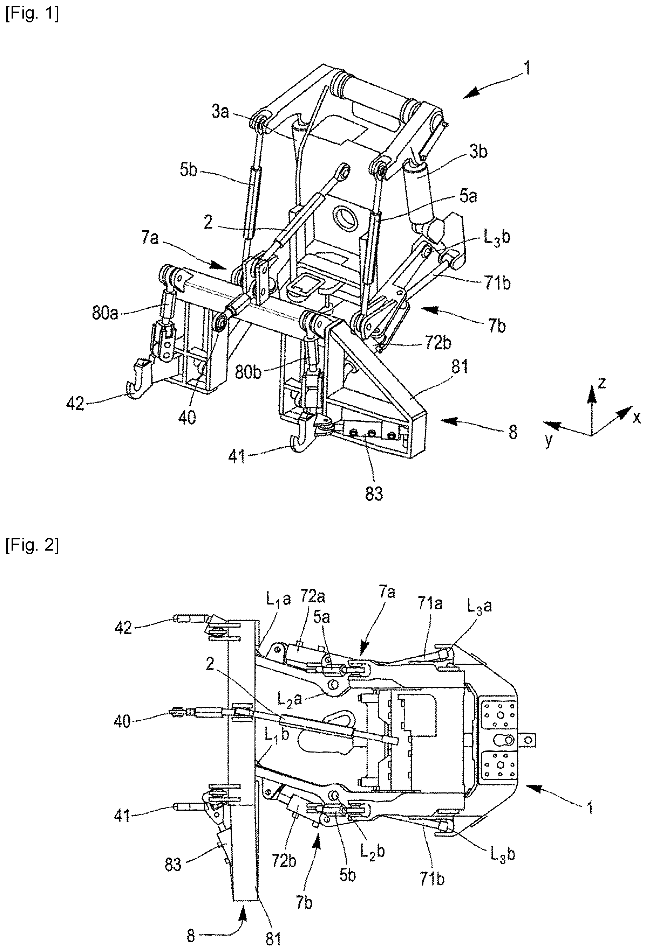

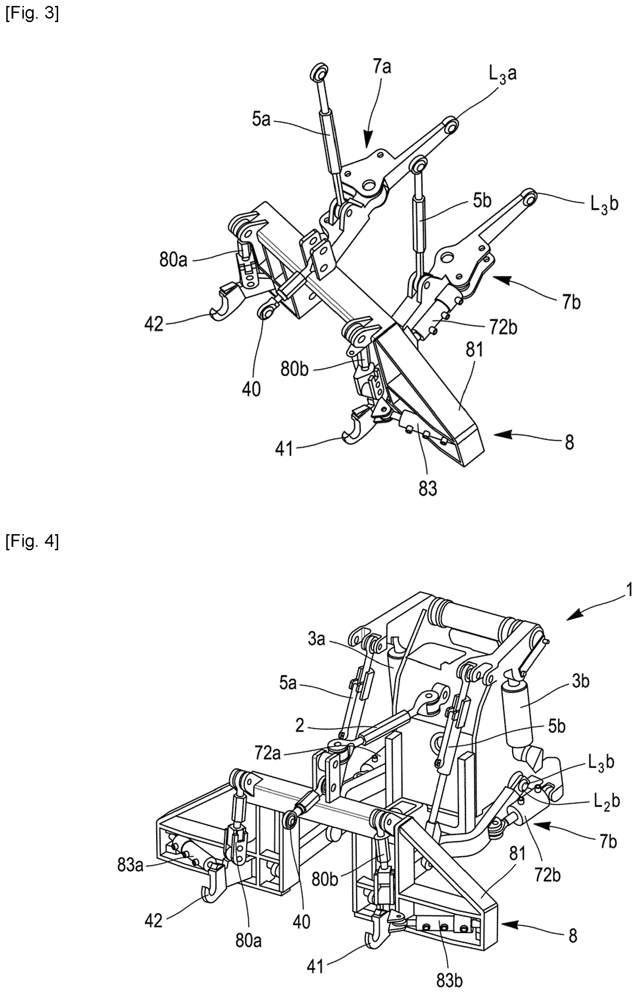

Les figures 1 et 4 décrivent une vue en perspective d'un dispositif d'attelage selon un premier mode et un second mode de réalisation de l'invention. Le dispositif est représenté fixé à un engin agricole 1.

Le dispositif comporte un châssis 8 transversal à la direction de progression de l'attelage.

On définit par (x), la direction de progression de l'attelage, c'est-à-dire la direction selon laquelle l'engin agricole avance.

On définit par (z), la direction verticale par rapport au sol et par (y), la direction transversale à la direction de progression de l'attelage, cette direction étant donc perpendiculaire à (x) et à (z).

Comme représenté sur les figures 1 et 4, le châssis 8 s'étend dans un plan perpendiculaire à la direction (x), et plus précisément suivant la direction transversale (y).

Le châssis comporte sur sa face arrière, par opposition à sa face avant qui est positionnée en regard de l'engin agricole, un système 41, 42 pour accrocher un outil agricole audit châssis.

Ce système d'accroche 41, 42 est prévu pour pivoter librement autour de l'axe vertical (z), par rapport au châssis 8.

Ce système d'accroche 41, 42 est préférentiellement positionné en partie inférieure du châssis 8.

Ce système d'accroche peut accessoirement être commandé en pivotement par des vérins 83, 83a, 83b.

Dans ce cas, le châssis est prolongé par un premier stabilisateur 81 tel que représenté sur les figures 1, 2, 3 ou bien par deux stabilisateurs répartis de chaque côté du châssis tel que représenté sur la figure 4.

Ces stabilisateurs 81 portent les vérins 83, 83a, 83b, et permettent de maintenir l'outil agricole perpendiculaire à sa trajectoire, et donc de l'empêcher d'osciller sous l'action du terrain (par exemple fortement accidenté) ou bien en cas d'instabilité dynamique de l'outil agricole, ou bien en position relevée de l'outil.

Selon le principe de l'invention, le dispositif d'attelage comprend un dispositif pour fixer le châssis 8 à l'engin agricole.

Ce dispositif de fixation comporte à minima deux bras 7a, 7b qui s'étendent suivant une direction sensiblement parallèle à la direction (x) de progression de l'attelage.

Selon, l'invention, chacun des bras 7a, 7b comporte en son extrémité proximale au châssis 8 une première liaison pivot L1a, L1b. Ces liaisons ont tout d'abord pour fonction de fixer l'extrémité proximale des bras avec le châssis 8. Ces liaisons ont ensuite pour fonction de permettre qu'au moins une portion des bras pivote par rapport au châssis 8 autour de l'axe vertical (z).

Toujours selon l'invention, chacun des bras comporte en outre une seconde liaison pivot L2a, L2b, qui permet qu'au moins ladite portion des bras pivote autour de l'axe vertical (z) par rapport à l'engin agricole.

Dans tous les cas le pivotement de la portion de bras s'effectue sous l'action de moyens d'actionnement 72a, 72b.

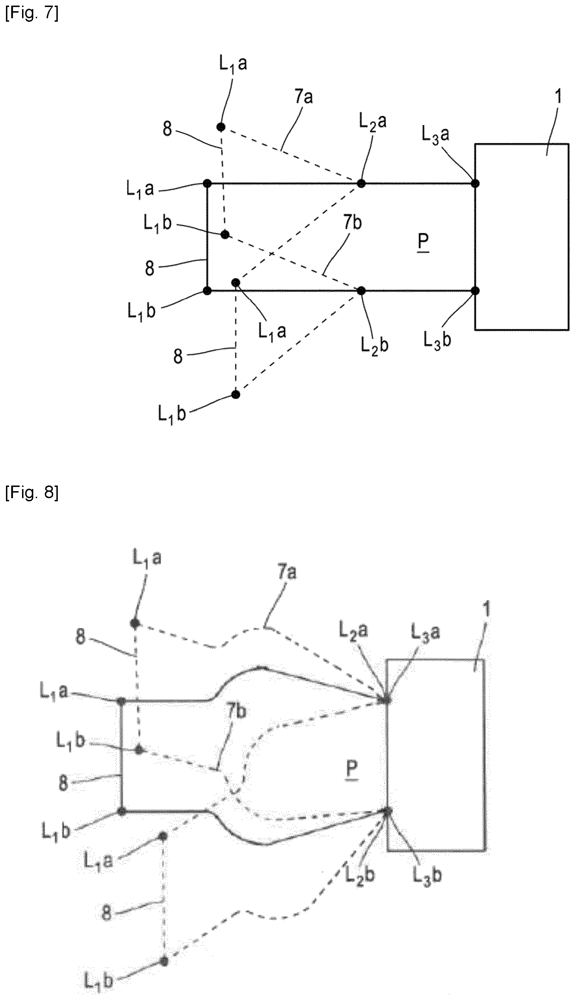

Ainsi, tel que représenté en figures 7 et 8, l'ensemble des quatre liaisons pivot L1a, L1b, L2a, L2b définit un parallélogramme déformable P lorsque les bras 7a, 7b (ou leur portion) pivotent autour de l'axe vertical (z) par rapport au châssis et par rapport à l'engin.

On entend classiquement par parallélogramme, un quadrilatère ayant ses deux côtés opposés parallèles.

Bien entendu, dans le cadre de l'invention, les bras 7a, 7b (ou leur portion) admettent un parallélisme non pas absolu mais relatif en ce sens que le montage desdits bras sur l'engin agricole et leur accroche sur le châssis 8 sont sujet d'une part aux imprécisions inhérentes à la fabrication des pièces mécaniques, et d'autre part aux déformations qui surviennent lors de l'usage des dispositifs d'attelage.

Ainsi, on comprend que le parallélisme des bras 7a, 7b (ou de leur portion) peut être dégradé jusqu'à plus ou moins 10 degrés du fait d'un défaut de fabrication ou bien du fait d'une déformation survenue lors d'un usage intensif du dispositif d'attelage ou d'un dommage accidentel.

Dans le cas présent, et quels que soient les modes de réalisation de l'invention, les bras 7a, 7b ont une longueur fixe, qui ne peut pas varier pour une réalisation donnée.

Compte tenu de la rigidité des bras, le pivotement des bras autour de l'axe vertical (z) par rapport au châssis, entraîne le pivotement des bras autour de l'axe vertical (z) par rapport à l'engin, et réciproquement.

De manière à répondre aux besoins de l'utilisateur, l'angle de pivotement des bras 7a, 7b autour de l'axe vertical (z) est compris entre 0 et +/- 45°, et préférentiellement entre 0 et +/- 30°.

L'amplitude de pivotement est en fait fonction du déport souhaité et de la longueur des bras.

Selon un premier mode de réalisation représenté en figures 1, 2 et 3, la seconde liaison pivot L2a, L2b des bras 7a, 7b est ménagée approximativement au milieu desdits bras. Selon cette configuration, la portion des bras comprise entre la liaison pivot L2a, L2b et la fixation L3a, L3b desdits bras sur l'engin agricole, n'est pas libre en rotation autour de l'axe vertical (z). C'est au contraire la portion des bras comprise entre la liaison pivot L2a, L2b et la liaison pivot L1a, L1b avec le châssis qui est libre en rotation autour de l'axe vertical (z).

Cette configuration permet un déplacement latéral des liaisons pivot L1a et L1b qui évite l'interférence avec les éléments de la structure de l'engin agricole, tels que les barres de traction, les dispositifs d'attelage d'outil remorqué, les moyens de commande d'outils animés.

Dans ce mode de réalisation, le pivotement de la portion de bras s'effectue sous l'action de moyens d'actionnement 72a, 72b affectés à chacun des bras 7a, 7b.

Ces moyens d'actionnement 72a, 72b sont du type vérins simple effet ou bien double effet fixés d'une part sur l'engin agricole, au niveau de la seconde liaison pivot L2a, L2b, et d'autre part sur le bras 7a, 7b, avant la première liaison pivot L1a, L1b des bras avec le châssis, ou bien directement sur le châssis 8.

Il serait aussi envisageable de n'utiliser qu'un seul moyen d'actionnement du type vérin double effet, affecté dès lors qu'à un seul bras.

Il serait aussi envisageable d'utiliser deux vérins double effet, pour chacun des bras.

Selon un perfectionnement du premier mode de réalisation représenté en figures 1, 2, la portion de bras située entre la seconde liaison pivot L2a, L2b et le point de fixation à l'engin agricole est doublée par une armature 71a, 71b.

Cet ajout permet d'accroître la rigidité et plus globalement la résistance mécanique du dispositif d'attelage tout entier, et permet aussi d'assurer que les pivots L2a et L2b ne se déplacent pas latéralement afin d'avoir un mouvement latéral précis en L1a - L1b.

Selon une variante de ce premier mode de réalisation (non représenté sur les figures), la seconde liaison pivot L2a, L2b des bras 7a, 7b est ménagée approximativement au niveau de la fixation L3a, L3b desdits bras sur l'engin agricole.

Dans cette configuration, chacun des bras 7a, 7b pivote entièrement par rapport à l'engin agricole et par rapport au châssis 8 sous l'action de moyens d'actionnement 72a, 72b.

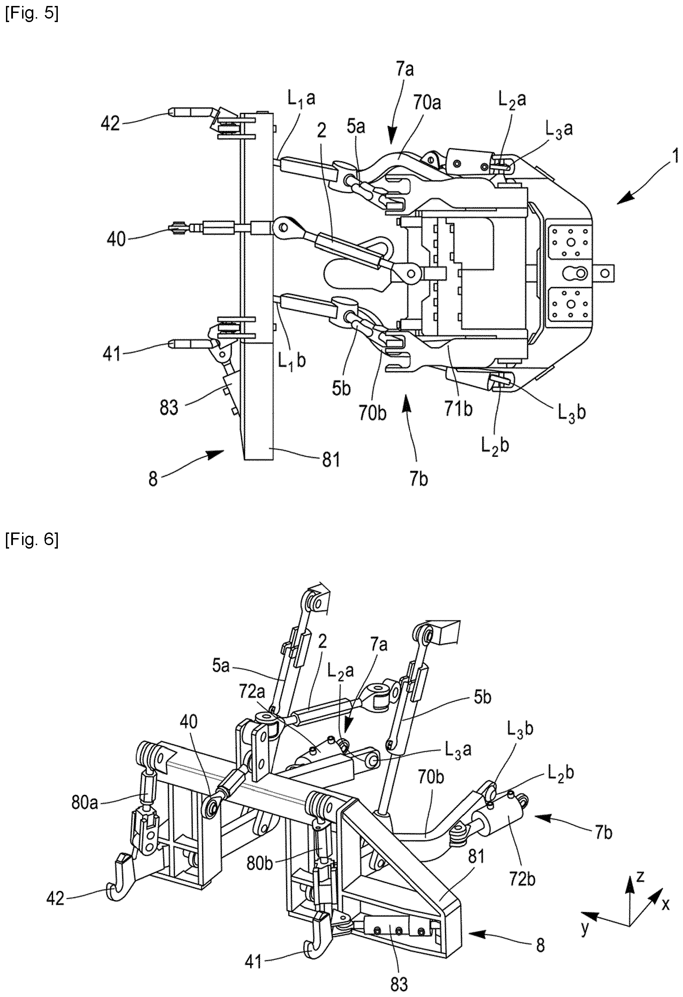

Selon un second mode de réalisation représenté en figures 4, 5 et 6, la seconde liaison pivot L2a, L2b des bras 7a, 7b est intégrée à la fixation L3a, L3b desdits bras sur l'engin agricole. De ce fait, la seconde liaison pivot L2a, L2b des bras 7a, 7b est disposée en l'autre extrémité distale des bras 7a, 7b. L'extrémité proximale par rapport au châssis des bras 7a, 7b comporte, rappelons-le, la première liaison pivot L1a, L1b des bras avec le châssis.

De surcroît, chacun des bras 7a, 7b présentent un coude 70a, 70b dont la convexité est tournée vers l'extérieur.

Cette courbure évite l'interférence avec les éléments de la structure de l'engin agricole, tels que les barres de traction, les dispositifs d'attelage d'outil remorqué, les moyens de commande d'outils animés.

En mode de construction simplifiée d'un engin agricole qui ne comporterait pas de risque d'interférence, les bras 7a -7b n'ont pas besoin des courbures de dégagement 70a -70b.

A titre indicatif, la longueur des bras 7a-7b est déterminée par le besoin de positionner le châssis 8 de sorte qu'il n'y ait pas d'interférence avec les éléments de transmission de puissance au sol (à savoir, les roues-chenilles).

La position des courbures 70a -70b est déterminée par la localisation des composants du châssis de l'engin agricole qu'il convient d'éviter lors du mouvement latéral des bras 7a-7b.

Dans ce mode de réalisation, le pivotement de la portion de bras s'effectue sous l'action de moyens d'actionnement 72a, 72b affectés à chacun des bras 7a, 7b. Ces moyens d'actionnement 72a, 72b sont du type vérins simple effet ou bien double effet, fixés d'une part sur l'engin agricole, au niveau de la seconde liaison pivot L2a, L2b, et d'autre part sur le bras 7a, 7b.

Le positionnement des vérins sur les bras 7a-7b est déterminé par les contraintes d'encombrement latéral, d'où l'intérêt de les lier avant la zone large représentées par les coudes 70a-70b.

Il serait aussi envisageable de n'utiliser qu'un seul moyen d'actionnement du type vérin double effet, affecté dès lors qu'à un seul bras.

Dans cette configuration les bras de relevage coudés ont une fonction triple :
- l'écartement des points de liaison avec le module de liaison à l'outil est équivalent à l'écartement des point d'ancrage avant, du côté de l'engin agricole pour constituer un parallélogramme, de sorte que le mouvement latéral n'impacte pas sur l'orientation du module de liaison à l'outil par rapport à l'engin agricole.
- le resserrement des bras en partie arrière du côté de l'outil agricole autorise une augmentation du débattement latéral sans générer d'interférence avec les pneumatiques ou chenilles de l'engin agricole.
- la forme coudée des bras permet le débattement latéral du module de liaison avec l'outil agricole sans interférer avec les autres composants situés à l'arrière de l'engin agricole.

De manière avantageuse et indépendamment des premier et second modes de réalisation, le système d'accroche de l'outil agricole comprend deux accroches 41, 42 disposées au niveau de la partie inférieure du châssis, symétriquement par rapport au plan médian vertical, lesdites accroches s'étendant selon le sens opposé à la direction de progression de l'attelage.

Ces accroches sont montées sur des pattes qui s'étendent depuis la face extérieure du châssis suivant la direction opposée à la direction de progression de l'attelage, c'est-à-dire vers l'arrière. Ces accroches peuvent être des crochets, des linguets, ou toute autre pièce de fixation.

Les pattes sont avantageusement montées suivant une liaison de pivot libre autour de l'axe vertical (z) au niveau de la partie inférieure du châssis. Ainsi, lorsque le châssis effectue une translation dans la direction transversale (y), le pivotement autorisé par le mouvement libre des accroches permet que la translation s'effectue sans induire de contrainte qui viendrait perturber la trajectoire de l'engin agricole et sans imposer des contraintes latérales excessives à l'outil agricole.

Ce dernier s'auto-équilibre en continu lors du mouvement de déport du châssis et se repositionne sur la trajectoire souhaitée sans que des contraintes mécaniques ne perturbent la progression de l'engin agricole. La convergence permise entre les directions portées par les accroches entraîne une légère rotation de l'outil agricole qui facilite son mouvement de déport et qui le stabilise dans sa trajectoire naturelle.

L'angle de pivotement permis autour de l'axe vertical (z) est globalement compris entre compris entre 0 et +/- 30°, et préférentiellement entre 0 et +/- 15°.

Selon le mode de réalisation décrit sur la figure 4, le pivotement autour de l'axe vertical des accroches 41, 42 peut aussi être contrôlé au moyen de deux vérins 83a, 83b, chacun desdits vérins étant associés respectivement à l'une des accroches 41, 42. Cette configuration contribue à maintenir la distance entre les accroches 41, 42 facilitant ainsi un couplage rigide de l'outil agricole avec le châssis 8.

Selon une autre variante représentée en figures 1, 2, 3, 5, 6, le pivotement autour de l'axe vertical (z) des accroches 41, 42 peut être contrôlé au moyen d'un seul vérin 83 associé dès lors à une seule accroche 41. Dans cette configuration, le pivotement de l'accroche contrôlé par le vérin entraîne le pivotement de l'autre accroche montée libre, au travers de la déviation du cadre de l'outil agricole lui-même.

Le contrôle du pivotement des accroches 41, 42 au moyen d'un ou deux vérins permet notamment de remettre l'outil agricole dans l'axe de la direction de progression. En effet, lorsque le relevage de l'outil est requis, il est nécessaire de replacer l'ensemble de l'attelage dans l'axe de la direction de progression et d'empêcher son pivotement et par voie de conséquence des déplacements latéraux aléatoires.

Dans ce cas, le châssis est prolongé par un premier stabilisateur 81 tel que représenté sur les figures 1, 2, 3 ou bien par deux stabilisateurs répartis de chaque côté du châssis tel que représenté sur la figure 4.

Ces stabilisateurs 81 portent les vérins 83, 83a, 83b, et permettent de maintenir le châssis perpendiculaire à sa trajectoire, et donc de l'empêcher d'osciller sous l'action du terrain (par exemple fortement accidenté) ou bien en cas d'instabilité dynamique de l'outil agricole, ou bien en position relevée de l'outil.

Le contrôle du pivotement des accroches 41 et 42 peut aussi être effectué en verrouillant la libre rotation des accroches autour de leur axe vertical, au moyen d'un simple élément mécanique, et non d'un vérin.

Avantageusement et de manière à permettre à l'outil de trouver naturellement son point d'équilibre de traction, les accroches 41, 42 peuvent aussi pivoter suivant la direction transversal, c'est-à-dire autour de l'axe transversal (y).

Pour ce faire, et tel que représenté en figures 1, 3, 4, 6, les accroches 41, 42 situées au niveau de la partie inférieure du second châssis sont retenues par des chandelles 80a, 80b. Ce montage permet et de faciliter la progression de l'outil agricole de manière à effacer les effets de la typologie du sol et de la déclivité du terrain.

Les chandelles peuvent être configurées suivant un mode à longueur fixe ou à longueur flottante. Lorsque la fonction de chandelle est réalisée au moyen de vérins hydrauliques, elles peuvent alors assurer en commande à distance les modes à longueur fixe, à longueur flottante, les modes à oscillation et accroissement de la course de levage de l'outil, en complément ou en replacement de la course de levage du dispositif de liaison au châssis de l'engin agricole.

De manière avantageuse et indépendamment des premier et second modes de réalisation, une accroche 40 supplémentaire et situé au niveau de la partie supérieure du châssis, peut être ajoutée afin de retenir l'outil lors du relevage de manière à ce que ledit outil puisse être soulevé intégralement. La présence d'une accroche 40 permet d'utiliser l'outil agricole en mode semi porté, voire porté sous réserve d'avoir un élément de liaison 2 entre la partie supérieure du châssis et l'engin agricole.

De manière à suivre les mouvements de balancier de l'outil agricole (ces mouvements s'inscrivant dans le plan horizontal), l'accroche 40 située au niveau de la partie supérieure du châssis peut aussi pivoter autour de l'axe vertical (z). Pour ce faire, l'accroche 40 peut être fixée au niveau de la partie supérieure du châssis et de l'outil agricole au moyen d'une liaison rotule par exemple.

De manière avantageuse et indépendamment des premier et second modes de réalisation, le dispositif de fixation du châssis à l'engin agricole comprend en partie haute un élément de liaison 2 entre la partie supérieure du châssis et l'engin agricole. Cet élément de liaison peut consister en un autre bras fixé en l'une de ses extrémités en un point d'articulation sur l'engin agricole et en l'autre de ses extrémités sur un point d'articulation sur le châssis. Bien entendu, ces points d'articulation sont du type rotule ou double articulation, afin de permettre la translation du châssis selon l'axe transversal, ainsi que le relevage dudit châssis.

Il pourrait être envisagé dans le périmètre de l'invention, comme troisième mode de réalisation (non représenté sur les figures), permettant d'actionner le pivotement de l'élément de liaison 2 au moyen des moyens d'actionnement 72a, 72b. Le pivotement de l'élément de liaison 2 autour de l'axe (z) et par rapport à l'engin agricole 1 et au châssis 8, entraînerait dès lors le pivotement des bras 7a et 7b, et la déformation du parallélogramme P.

De manière avantageuse et indépendamment des premier et second modes de réalisation, les bras 7a, 7b peuvent être commandés en relevage, de manière à pouvoir soulever l'outil agricole par rapport au sol.

De cette façon, chacun des bras est fixé sur l'engin agricole suivant une liaison pivot L3a, L3b autour de l'axe transversal (y).

Avantageusement, les bras 7a, 7b peuvent être commandés par des moyens de relevage 3a, 3b.

Avantageusement, les bras 7a, 7b peuvent être retenus par des chandelles 5a, 5b. Le montage des chandelles permet des réglages d'inclinaison et de gestion des charges déportées qui sont plus compliquée à maîtriser si le levage est associé au chandelles.

Cependant, selon une variante, les bras 7a, 7b peuvent être commandés par des moyens de relevage intégrés à des chandelles 5a, 5b.

Les chandelles peuvent être configurées suivant un mode à longueur fixe ou à longueur flottante. Lorsque la fonction de chandelle est réalisée au moyen de vérins hydrauliques, elles peuvent alors assurer en commande à distance les modes à longueur fixe, à longueur flottante, les modes à oscillation et accroissement de la course de levage de l'outil, en complément ou en replacement de la course de levage du dispositif de liaison au châssis de l'engin agricole.

De manière avantageuse et indépendamment des premier et second modes de réalisation, le dispositif d'attelage peut comprendre un capteur C pour identifier la position du châssis par rapport à l'engin agricole. Dans ce cas, ce capteur, dit capteur de feedback est positionné sur le châssis afin de connaître les déviations du châssis par rapport à la position de consigne, améliorant la précision de correction au travail et confirmant l'exécution du recentrage pour les manœuvres et le transport.

Ainsi, le dispositif d'attelage selon l'invention représente une chaîne mécanique naturellement stable et facile à contrôler. Il permet de travailler avec des outils à fort tirage ou bien équipés de disques comme éléments de travail.

Il permet également de se connecter à l'engin agricole suivant les trois points d'attelage usuels, et donc sans modification des composants de l'engin agricole.

Il permet en outre d'alléger le dispositif d'attelage et de maximiser l'espace au niveau de la ligne de transmission de l'outil agricole.

En résumé, le déport induit par le dispositif d'attelage est réduit d'un tiers tout en conservant les mêmes fonctionnalités de correction de déport que celle obtenues avec la solution décrite dans la demande WO2018172458. Il permet en outre un allègement de l'ordre de 50% ainsi qu'une réduction significative des coûts de production.

Bien sûr, l'invention n'est pas limitée aux exemples qui viennent d'être décrits et de nombreux aménagements peuvent être apportés à ces exemples sans sortir du cadre de l'invention. De plus, les différentes caractéristiques, formes, variantes et modes de réalisation de l'invention peuvent être associés les uns avec les autres selon diverses combinaisons dans la mesure où ils ne sont pas incompatibles ou exclusifs les uns des autres.

## Revendications

1. Dispositif d'attelage d'un outil, propre à être monté sur un engin agricole (1), comportant :
- un châssis (8) transversal à la direction de progression de l'attelage,
- un système (41, 42) pour accrocher un outil agricole audit châssis,
- un dispositif de fixation du châssis (8) à l'engin agricole, le dispositif de fixation comportant au moins deux bras (7a, 7b) dotés de moyens d'actionnement (72a, 72b), lesdits bras étant destinés à relier le châssis (8) à l'engin agricole, lesdits bras s'étendant suivant une direction sensiblement parallèle à celle de progression de l'attelage, chacun des bras (7a, 7b) comportant en son extrémité proximale par rapport au châssis (8) une première liaison pivot (L1a, L1b) avec le châssis (8), permettant à au moins une portion dudit bras de pivoter par rapport au châssis (8) autour d'un axe vertical (z), ainsi qu'une seconde liaison pivot (L2a, L2b) avec l'engin agricole, permettant à au moins ladite portion dudit bras de pivoter par rapport à l'engin agricole (1) autour de l'axe vertical (z), l'ensemble des quatre liaisons pivot (L1a, L1b, L2a, L2b) définissant ainsi un parallélogramme déformable (P) sous l'action des moyens d'actionnement (72a, 72b),
ledit système d'accroche (41, 42) étant prévu pour pivoter librement par rapport au châssis (8), autour d'un axe vertical (z)
**caractérisé en ce que** les moyens d'actionnement sont configurés pour faire pivoter lesdits bras autour de l'axe vertical (z)**.**

2. Dispositif d'attelage d'un outil, selon la revendication 1, **caractérisé en ce que** la seconde liaison pivot (L2a, L2b) des bras (7a, 7b) est disposée en leur extrémité distale par rapport au châssis, ladite extrémité distale formant en outre une fixation desdits bras sur l'engin agricole, et **en ce que** lesdits bras présentent chacun un coude (70a, 70b) dont la convexité est tournée vers l'extérieur.

3. Dispositif d'attelage d'un outil, selon la revendication 1, **caractérisé en ce que** la seconde liaison pivot (L2a, L2b) des bras (7a, 7b) est ménagée approximativement au milieu desdits bras.

4. Dispositif d'attelage d'un outil, selon la revendication 3, **caractérisé en ce que** la portion de bras située entre la seconde liaison pivot (L2a, L2b) et le point de fixation à l'engin agricole est doublée par une armature (71a, 71b).

5. Dispositif d'attelage d'un outil, selon l'une quelconque des revendications précédentes, **caractérisé en ce que** le dispositif d'accroche de l'outil agricole au châssis comprend deux accroches (41, 42) disposées au niveau de la partie inférieure du châssis, symétriquement par rapport au plan médian vertical, lesdites accroches s'étendant selon le sens opposé à la direction de progression de l'attelage.

6. Dispositif d'attelage d'un outil, selon la revendication 5, **caractérisé en ce que** les accroches (41, 42) situées au niveau de la partie inférieure du châssis sont également pivotantes autour de l'axe s'étendant transversalement à la direction de progression de l'attelage, et retenues aux moyens de chandelles (80a, 80b).

7. Dispositif d'attelage d'un outil, selon la revendication 6, **caractérisé en ce que** l'angle de pivotement des deux accroches (41, 42) autour de l'axe vertical (z) est compris entre 0 et +/- 30°, et préférentiellement entre 0 et +/- 15°.

8. Dispositif d'attelage d'un outil, selon la revendication 6 ou 7, **caractérisé en ce que** le pivotement des accroches autour de l'axe vertical (z) peut être en outre contrôlé par au moins un vérin (83, 83a, 83b), ledit au moins vérin étant apte à travailler selon un premier mode correspondant à la libre rotation des accroches (41, 42) autour de l'axe vertical, et un second mode dans lequel la rotation des accroches (41, 42) autour de l'axe vertical est verrouillée, le châssis étant prolongé en transversal par un premier stabilisateur (81), voire un second stabilisateur.

9. Dispositif d'attelage d'un outil, selon l'une quelconque des revendications précédentes, **caractérisé en ce que** le dispositif d'accroche comprend en outre une troisième accroche (40) située au niveau de la partie supérieure du châssis, ladite accroche constituant un élément de retenue de l'outil agricole.

10. Dispositif d'attelage d'un outil, selon l'une quelconque des revendications précédentes, **caractérisé en ce que** le dispositif de fixation du châssis à l'engin agricole comprend en partie haute un élément de liaison (2) entre la partie supérieure du châssis et l'engin agricole, et **en ce que** les bras (7a, 7b) sont avantageusement commandés en relevage, chacune des fixations des bras sur l'engin agricole définissant alors une liaison pivot L3a, L3b autour de l'axe s'étendant transversalement à la direction de progression de l'attelage.

11. Dispositif d'attelage d'un outil, selon la revendication précédente, **caractérisé en ce que** les bras (7a, 7b) sont commandés par des moyens de relevage (3a, 3b) et retenus par des chandelles (5a, 5b).

12. Dispositif d'attelage d'un outil, selon la revendication 10, **caractérisé en ce que** les bras (7a, 7b) sont commandés par des moyens de relevage intégrés à des chandelles (5a, 5b).

13. Dispositif d'attelage d'un outil, selon l'une quelconque des revendications précédentes, **caractérisé en ce que** les moyens d'actionnement du pivotement des bras (7a, 7b) sont constitués de deux vérins (72a, 72b) simple effet affectés chacun à un bras, ou bien sont constitués d'un seul vérin double effet affecté à l'un des deux bras.

14. Dispositif d'attelage d'un outil, selon l'une quelconque des revendications précédentes, **caractérisé en ce que** les moyens de relevage (3a, 3b) sont des vérins à simple effet ou à double effet.

15. Dispositif d'attelage d'un outil, selon l'une quelconque des revendications précédentes, **caractérisé en ce que** l'angle de pivotement des bras (7a, 7b) autour de l'axe vertical (z) est compris entre 0 et +/- 45°, et préférentiellement entre 0 et +/- 30°.

16. Dispositif d'attelage d'un outil, selon l'une quelconque des revendications précédentes, **caractérisé en ce qu'**il comprend un capteur C pour identifier la position du châssis par rapport à l'engin agricole.

## Patentansprüche

1. Vorrichtung zum Ankoppeln eines Arbeitsgeräts, die auf eine landwirtschaftliche Maschine (1) montiert werden kann, mit:
- einem Gestell (8) quer zur Bewegungsrichtung der Kopplung,
- einem System (41, 42) zum Anhängen eines landwirtschaftlichen Arbeitsgeräts an das Gestell,
- eine Vorrichtung zur Befestigung des Gestells (8) an der landwirtschaftlichen Maschine,
wobei die Befestigungsvorrichtung wenigstens zwei Arme (7a, 7b) umfasst, die mit Betätigungsmitteln (72a, 72b) versehen sind, wobei die Arme das Gestell (8) mit der landwirtschaftlichen Maschine verbinden sollen, wobei sich die Arme in eine Richtung im Wesentlichen parallel zu der Bewegungsrichtung der Kopplung erstrecken, wobei jeder der Arme (7a, 7b) an seinem in Bezug auf das Gestell (8) proximalen Ende eine erste Drehverbindung (L1a, L1b) mit dem Gestell (8) aufweist, die es wenigstens einem Teil dieses Armes erlaubt, in Bezug auf das Gestell (8) um eine vertikale Achse (z) zu schwenken, sowie eine zweite Drehverbindung (L2a, L2b) mit der landwirtschaftlichen Maschine aufweist, die es wenigstens dem Teil dieses Armes erlaubt, in Bezug auf die landwirtschaftliche Maschine (1) um die vertikale Achse (z) zu schwenken, wodurch die vier Drehverbindungen (L1a, L1b, L2a, L2b) ein Parallelogramm (P) definieren, das unter der Wirkung der Betätigungsmittel (72a, 72b) verformbar ist, wobei das Anhängesystem (41, 42) in Bezug auf das Gestell (8) frei um eine vertikale Achse (z) schwenkbar ist, **dadurch gekennzeichnet, dass** die Betätigungsmittel (72a, 72b) dazu bestimmt sind, die Arme um die vertikale Achse (z) zu verschwenken..

2. Vorrichtung zum Ankoppeln eines Arbeitsgeräts gemäß Anspruch 1, **dadurch gekennzeichnet, dass** sich die zweite Drehverbindung (L2a, L2b) der Arme (7a, 7b) an ihrem in Bezug auf das Gestell distalen Ende befindet, wobei das distale Ende ferner eine Befestigung der Arme an der landwirtschaftlichen Maschine bildet, und dadurch, dass die Arme jeweils eine Abwinklung (70a, 70b) aufweisen, die nach außen gekrümmt ist.

3. Vorrichtung zum Ankoppeln eines Arbeitsgeräts gemäß Anspruch 1,
**dadurch gekennzeichnet, dass** die zweite Drehverbindung (L2a, L2b) der Arme (7a, 7b) ungefähr in der Mitte der Arme angeordnet ist.

4. Vorrichtung zum Ankoppeln eines Arbeitsgeräts gemäß Anspruch 3, **dadurch gekennzeichnet, dass** der Armteil, der sich zwischen der zweiten Drehverbindung (L2a, L2b) und dem Befestigungspunkt an der landwirtschaftlichen Maschine befindet, durch eine Verstärkung (71a, 71b) abgestützt ist.

5. Vorrichtung zum Ankoppeln eines Arbeitsgeräts gemäß einem der vorstehenden Ansprüche, **dadurch gekennzeichnet, dass** die Anhängevorrichtung für das landwirtschaftliche Arbeitsgerät am Gestell zwei Anhängungen (41, 42) umfasst, die sich im unteren Teil des Gestells symmetrisch zur vertikalen Mittelebene befinden, wobei sich die Anhängungen entgegengesetzt zur Bewegungsrichtung der Kopplung erstrecken.

6. Vorrichtung zum Ankoppeln eines Arbeitsgeräts gemäß Anspruch 5, **dadurch gekennzeichnet, dass** die Anhängungen (41, 42), die sich im unteren Teil des Gestells befinden, auch um die Achse, die sich quer zur Bewegungsrichtung der Kopplung erstreckt, schwenkbar sind und durch Hubstangen (80a, 80b) gehalten werden.

7. Vorrichtung zum Ankoppeln eines Arbeitsgeräts gemäß Anspruch 6, **dadurch gekennzeichnet, dass** der Drehwinkel der beiden Anhängungen (41, 42) um die vertikale Achse (z) zwischen 0 und +/- 30° und vorzugsweise zwischen 0 und +/- 15° liegt.

8. Vorrichtung zum Ankoppeln eines Arbeitsgeräts gemäß Anspruch 6 oder 7, **dadurch gekennzeichnet, dass** die Schwenkung der Anhängungen um die vertikale Achse (z) ferner durch wenigstens einen Zylinder (83, 83a, 83b) gesteuert werden kann, wobei der wenigstens eine Zylinder geeignet ist, in einem ersten Modus, der der freien Drehung der Anhängungen (41, 42) um die vertikale Achse entspricht, und in einem zweiten Modus, in dem die Drehung der Anhängungen (41, 42) um die vertikale Achse verriegelt ist, zu arbeiten, wobei das Gestell in Querrichtung durch einen ersten Stabilisator (81) oder sogar auch einen zweiten Stabilisator verlängert ist.

9. Vorrichtung zum Ankoppeln eines Arbeitsgeräts gemäß einem der vorstehenden Ansprüche, **dadurch gekennzeichnet, dass** die Anhängevorrichtung ferner eine dritte Anhängung (40) umfasst, die sich im oberen Teil des Gestells befindet, wobei die Anhängung ein Halteelement für das landwirtschaftliche Arbeitsgerät bildet.

10. Vorrichtung zum Ankoppeln eines Arbeitsgeräts gemäß einem der vorstehenden Ansprüche, **dadurch gekennzeichnet, dass** die Vorrichtung zur Befestigung des Gestells an der landwirtschaftlichen Maschine im oberen Teil ein Verbindungselement (2) zwischen dem oberen Teil des Gestells und der landwirtschaftlichen Maschine umfasst, und dadurch, dass die Arme (7a, 7b) vorteilhafterweise im Hubmodus gesteuert werden, wobei dann jede der Befestigungen der Arme an der landwirtschaftlichen Maschine eine Schwenkverbindung (L3a, L3b) um die Achse herum definiert, die sich quer zur Bewegungsrichtung der Kopplung erstreckt.

11. Vorrichtung zum Ankoppeln eines Arbeitsgeräts nach dem vorhergehenden Anspruch, **dadurch gekennzeichnet, dass** die Arme (7a, 7b) von Hubeinrichtungen (3a, 3b) gesteuert und durch Hubstangen (5a, 5b) gehalten werden.

12. Vorrichtung zum Ankoppeln eines Arbeitsgeräts gemäß Anspruch 10, **dadurch gekennzeichnet, dass** die Arme (7a, 7b) durch in die Hubstangen (5a, 5b) integrierte Hubeinrichtungen betätigt werden..

13. Vorrichtung zum Ankoppeln eines Arbeitsgeräts gemäß einem der vorstehenden Ansprüche, **dadurch gekennzeichnet, dass** die Mittel zur Betätigung der Schwenkbewegung der Arme (7a, 7b) aus zwei einfachwirkenden Zylindern (72a, 72b) bestehen, von denen jeder einem Arm zugeordnet ist, oder aber aus einem einzigen doppeltwirkenden Zylinder bestehen, der einem der beiden Arme zugeordnet ist.

14. Vorrichtung zum Ankoppeln eines Arbeitsgeräts gemäß einem der vorstehenden Ansprüche, **dadurch gekennzeichnet, dass** die Hubeinrichtungen (3a, 3b) einfachwirkende oder doppeltwirkende Zylinder sind.

15. Vorrichtung zum Ankoppeln eines Arbeitsgeräts gemäß einem der vorstehenden Ansprüche, **dadurch gekennzeichnet, dass** der Drehwinkel der Arme (7a, 7b) um die vertikale Achse (z) zwischen 0 und +/- 45° und vorzugsweise zwischen 0 und +/- 30° liegt.

16. Vorrichtung zum Ankoppeln eines Arbeitsgeräts gemäß einem der vorstehenden Ansprüche, **dadurch gekennzeichnet, dass** sie einen Sensor C zum Identifizieren der Position des Gestells bezüglich der landwirtschaftlichen Maschine umfasst.

## Claims

1. A hitch device for an implement, suitable for being mounted on an agricultural vehicle (1), comprising:
- a chassis (8) transverse to the direction of travel of the hitch;
- a system (41, 42) for coupling an agricultural implement to said chassis,
- an attachment device for attaching the chassis (8) to the agricultural vehicle,
the attachment device comprising at least two arms (7a, 7b) provided with activation means (72a, 72b) and intended to link the chassis (8) to the agricultural vehicle, which arms extending in a direction substantially parallel to the direction of travel of the hitch, each of the arms (7a, 7b) comprising, at the proximal end thereof relative to the chassis (8), a first pivot link (L1a, L1b) with the chassis (8), allowing at least one portion of said arm to pivot relative to the chassis (8) about a vertical axis (z), as well as a second pivot link (L2a, L2b) with the agricultural vehicle, allowing at least said portion of said arm to pivot relative to the agricultural vehicle (1) about the vertical axis (z), the set of four pivot links (L1a, L1b, L2a, L2d) thus defining a deformable parallelogram (P) that is deformable under the action of the activation means (72a, 72b),
said coupling system being designed to pivot freely relative to the chassis (8), about a vertical axis (z), **characterized in that** activation means (72a, 72b) are intended to pivot said arms about the vertical axis (z).

2. The hitch device for an implement as claimed in claim 1, **characterized in that** the second pivot link (L2a, L2b) of the arms (7a, 7b) is disposed at the distal end thereof relative to the chassis, with said distal end also forming an attachment for attaching said arms to the agricultural vehicle, and **in that** said arms each have an elbow (70a, 70b), the convexity of which is outward facing.

3. The hitch device for an implement as claimed in claim 1, **characterized in that** the second pivot link (L2a, L2b) of the arms (7a, 7b) is arranged approximately at the middle of said arms.

4. The hitch device for an implement as claimed in claim 3, **characterized in that** the portion of the arms located between the second pivot link (L2a, L2b) and the point of attachment with the agricultural vehicle is supported by a reinforcement (71a, 71b).

5. The hitch device for an implement as claimed in any one of the preceding claims, **characterized in that** the device for coupling the agricultural implement to the chassis comprises two hooks (41, 42) disposed on the lower part of the chassis, symmetrically relative to the vertical median plane, with said hooks extending in the opposite direction to the direction of travel of the hitch.

6. The hitch device for an implement as claimed in claim 5, **characterized in that** the hooks (41, 42) located on the lower part of the chassis also pivot about the axis extending transverse to the direction of travel of the hitch and are retained by means of stanchions (80a, 80b).

7. The hitch device for an implement as claimed in claim 6, **characterized in that** the pivot angle of the two hooks (41, 42) about the vertical axis (z) ranges between 0 and +/- 30°, and preferably between 0 and +/- 15°.

8. The hitch device for an implement as claimed in claim 6 or 7, **characterized in that** the pivoting of the hooks about the vertical axis (z) also can be controlled by at least one cylinder (83, 83a, 83b), with said at least one cylinder being able to work in a first mode corresponding to the free rotation of the hooks (41, 42) about the vertical axis, and a second mode, in which the rotation of the hooks (41, 42) about the vertical axis is locked, with the chassis being transversely extended by a first stabilizer (81), and even a second stabilizer.

9. The hitch device for an implement as claimed in any one of the preceding claims, **characterized in that** the coupling device further comprises a third hook (40) located on the upper part of the chassis, with said hook forming an element for retaining the agricultural instrument.

10. The hitch device for an implement as claimed in any one of the preceding claims, **characterized in that** the attachment device for attaching the chassis to the agricultural vehicle comprises, in the upper part, a link element (2) between the upper part of the chassis and the agricultural vehicle, and **in that** the arms (7a, 7b) are advantageously controlled in terms of lift, with each of the attachments for attaching the arms to the agricultural vehicle then defining a pivot link (L3a, L3b) about the axis extending transverse to the direction of travel of the hitch.

11. The hitch device for an implement as claimed in the preceding claim, **characterized in that** the arms (7a, 7b) are controlled by lifting means (3a, 3b) and are retained by stanchions (5a, 5b).

12. The hitch device for an implement as claimed in claim 10, **characterized in that** the arms (7a, 7b) are controlled by lifting means integrated in the stanchions (5a, 5b).

13. The hitch device for an implement as claimed in any one of the preceding claims, **characterized in that** the means for activating the pivoting of the arms (7a, 7b) are formed by two single-acting cylinders (72a, 72b) each assigned to one arm, or are even formed by a single double-acting cylinder assigned to one of the two arms.

14. The hitch device for an implement as claimed in any one of the preceding claims, **characterized in that** the lifting means (3a, 3b) are single-acting or double-acting cylinders.

15. The hitch device for an implement as claimed in any one of the preceding claims, **characterized in that** the pivot angle of the arms (7a, 7b) about the vertical axis (z) ranges between 0 and +/- 45°, and preferably between 0 and +/- 30°.

16. The hitch device for an implement as claimed in any one of the preceding claims, **characterized in that** it comprises a sensor C for identifying the position of the chassis relative to the agricultural vehicle.
